# EUROPEAN PATENT SPECIFICATION

(11) **EP 1 918 067 B1**
(45) Date of publication and mention of the grant of the patent: **14.10.2009**
(21) Application number: 06807861.7
(22) Date of filing: 18.07.2006
(51) Int. Cl.: B23Q 9/00, F16B 47/00

(54) **FLEXIBLE ASSEMBLY FOR PERFORMING WORK ON LARGE SURFACES**
FLEXIBLE ANORDNUNG ZUR DURCHFÜHRUNG VON ARBEITEN AUF GROSSEN OBERFLÄCHEN
ENSEMBLE FLEXIBLE POUR LA REALISATION DE TRAVAUX SUR DE GRANDES SURFACES

(30) Priority: 20.07.2005 ES 200501768
(43) Date of publication of application: 07.05.2008
(73) Proprietor: M. Torres Diseños Industriales, S.A.U., 31119 Torres De Elorz (Navarra) (ES)
(72) Inventor: TORRES MARTINEZ, Manuel, E-31007 Pamplona, Navarra (ES); TURGAIZ GUERRERO, Jesus Maria, E-30320 Fuente Alamo, Murcia (ES); MICHAELIS, Hartmut, 211129 Hamburg (DE); KOTT, Horst, 211129 Hamburg (DE); SPENGLER, Matthias, 211129 Hamburg (DE)
(74) Representative: Evens, Paul Jonathan
(86) International application number: PCT/ES2006/000412
(87) International publication number: WO 2007/010066

(56) References cited:
- ES-T3- 2 031 273
- FR-A1- 2 809 034
- US-A- 5 468 099
- US-A- 6 073 326
- US-A1- 2004 265 076
- US-A1- 2004 265 077

## Description

### Field of the Art

The object of the present invention relates to systems that are used to perform work on large surfaces, such as machining, riveting, welding, inspection and painting for example, proposing an assembly that is easy to carry out, whereby it can act safely and precisely with the capacity for positioning in five shafts on any work surface.

### State of the Art

Large structures such as airplanes, ships and the like are formed by large laminar surfaces adapted to the shape and configuration of their support structures. These configurations allow the surfaces to be complex curves on which it is necessary to perform the application work. Said tasks to be carried out include for example fixing the surfaces by means of rivets, welding or the like.

For all these tasks machines are currently used which are formed by large structures, regardless of the application surfaces, provided with the tools necessary for the operations to be carried out, said structures moving on external systems. These types of machines are very conditional in relation to the shape of the application surfaces, therefore their use is normally limited to the surfaces analyzed during their design.

There are also flexible machining systems which can move in order to place a machining head with respect to any point of a surface, such as the already expired solution of patent SE 8,305,818 for example, comprising a machining device formed by rails which are assembled on circular channels in which the ends of the sheets to be machined are inserted. In this solution a machining carriage moves on the curved rails in order to be placed at the machining points, but it does not assure the perpendicularity of the tool on the work surface, which can cause defective precision of the operations.

Patent document US 2002/0007548 also describes a machining device for forming airplane structures, comprising a machining carriage moving on rails arranged on a structure separated from the fuselage to be formed, which also takes away precision from the machining operations.

Other solutions such as those in patent documents US 6,098,260 and US 2003/0116331, comprise a machining device formed by rails which are fixed by suction cups on the plates of the structure to be machined, a carriage which can move longitudinally being incorporated on said rails, on which another carriage carrying a machining head with the possibility of transverse movement is arranged. These solutions allow working with precision on flat surfaces, but do not assure the perpendicularity of the working tool with respect to the work surface when it is curved, therefore in this case the precision is also deficient.

US-A-5468099 shows an assembly according to the preamble of claim 1.

### Object of the invention

According to the present invention, a flexible machining assembly is proposed which is provided with constructive and functional features making it adaptable to operate with precision on any type of flat or curved surface, therefore being applicable for airplane fuselage structures or the like.

The assembly object of the invention consists of a frame in which the machining head is incorporated, the frame being provided with means for moving and lifting, provided with lifting and fixing systems, to thus be able to be placed in the necessary work positions, whereas the machining head is incorporated on a carriage provided with transverse movement on the frame.

According to an assembly embodiment, the means for moving the frame consist of two side groups provided with movement in height, longitudinal movement and a fixing system by means of suction cups.

The frame of the mobile assembly further incorporates at the lower part suction cups arranged in vertical spindles which are associated to a common actuation system by means of a servomotor and belt drive, such that said suction cups allow fixing the mobile assembly on the application surface in order to carry out the machining once the working head is placed in relation to the selected point, the path of the head for the machining being determined by means of the vertical movement, by means of the mentioned spindles of the fixing suction cups.

An arrangement is therefore achieved allowing movement on the work surface by means of the combined action of the support-lifting and sliding assemblies, achieving the precise movement of the working head on the work surface in an alternate (step by step) manner.

The combination of said transfer on the application surface with the transverse movement of the carriage carrying the head, with respect to the frame, defines a Cartesian movement which allows placing the machining head exactly on the operation points, thus being able to be establish a perfect holding with the support assemblies themselves in each case, in order to carry out the operations to be performed at the indicated points by means of the vertical movement of the machining head (if the work requires it), placing the working head or assembly at the required angle with respect to the application surface.

The frame carrying the machining head can be incorporated according to another assembly embodiment, on flexible guide rails (CFRP) which are fixed by means of suction cups on the application surface- The carrier frame slides longitudinally and step by step on those guides, such that by combining this movement with the already existing movement in the frame itself, the vertical movement thereof and the transverse movement of the working head, the work point can be placed in the required location and angles. It must be pointed out that the positioning precision of the working head is independent of the positioning precision of the flexible guiding systems.

The longitudinal movement rails are formed by flexible profiles (CFRP) arranged in parallel and joined by means of transverse plates, said profiles having vacuum suction cups that allow the fixing on the structure to be machined, the profiles themselves being used as vacuum storage and distribution channels, sectoring the holding points in order to minimize the effects of possible local vacuum loses.

The actuation of said longitudinal movement in this case comprises a traction system and a locking system, being integrated in respective similar side assemblies, operating in a synchronised manner on the respective rails, said traction and locking systems acting in a coordinated sequence for a step by step forward movement. The coordinated movements allow controlling the position and alignment of the shafts according to the requirements demanded by the work to be performed.

The locking system forms, according to the point of the work process, a locking allowing the movement of the mobile assembly on the longitudinal profiles in a step of longitudinal movement, by means of the rolling sliding of the traction system on the profiles; the rolling means being in an elastic suspension arrangement with respect to the frame of the mobile assembly, which allows a vertical floatability of said mobile assembly.

The entire system is controlled by computer management equipment having various systems for adapting the equipment to the application surfaces, such as an on-line positioning reference and correction system based on two artificial vision cameras, for example. This control system, integrated into the computer control system, allows establishing the position of the work unit with respect to areas of the surface to be worked with special features, placing and correcting, if necessary, the parameters defining the location of the work unit on the application surface. It also has additional sensors increasing the capacity of the working head according to the tasks to be performed, such as for example, a hold-down plate with controller with the task of assuring that the parts to be worked are perfectly held down. This device has a system for regulating the hold-down force, also having an analog or digital system (optional) controlling the forward movement of the shaft Z for very delicate or high precision work, such as cone countersinks, etc.

### Description of the Drawings

Figure 1 shows a perspective view of the machining assembly object of the invention according to the embodiment of support by means of two lifting support assemblies.
Figure 2 is a perspective view of the same machining assembly from another angle of observation.
Figures 3 and 4 are respective front and profile views of the previous machining assembly.
Figure 5 is a perspective view of the block carrying the machining head.
Figure 6 is a perspective view of the mobile frame of the machining assembly with one of the support groups.
Figure 7 is a perspective view of the mobile frame of the machining assembly with its other support group.
Figure 8 is a perspective view of the assembly embodiment of the machining assembly on movement rails.
Figures 9 and 10 are respective front and profile views of said arrangement of the machining assembly on movement rails. Figure 11 is a perspective view of the support rails of the machining assembly for the previous embodiment.
Figure 12 is an enlarged perspective view of the arrangement of the assembly of the frame of the machining assembly on the movement rails.

### Detailed Description of the Invention

The object of the invention relates to a flexible machining assembly, which is provided with constructive and functional features making it able to perform any type of operation with precision by simply changing the tool, on any type of flat or curved surface, therefore being applicable for structures such as airplane fuselage structures or the like.

The machining assembly object of the invention forms a work unit consisting of:
A.- Two longitudinal drive units, of the work unit, which will be called hereinafter shafts X, which units are provided with a forward movement assembly, by means of a servomotor and a spindle with controlled clearance nuts, which can work together, creating a longitudinal forward movement on the application surface, or independently, achieving specific angular movements for special work.
   On each of the movements X, and in order to fix the work unit during the longitudinal movement, vacuum suction cups are placed assuring the rigidity and precision necessary for the movement.
B.- A main frame, which is the joining link of all the subsystems of the work unit, the subsystems being:
   - Mechanisms for forward movement towards the work surface, which hereinafter will be called shaft *Z*, which is provided with three or more forward movement assemblies, by means of servomotors, pulleys and spindles with controlled clearance screws, which can work together, creating a forward movement perpendicular to the work surface, or independently, achieving specific movements for special work.
      At the end of each one of the movements Z, and in order to fix the work unit to the application surface, two vacuum suction cups are placed assuring the rigidity and precision necessary for the work applications. A great advantage is that this arrangement allows creating a highly rigid and precise working device, allowing the work of positioning in five shafts.
   - Mechanism for forward movement parallel and perpendicular to the movement X, which hereinafter will be called internal movement X and Y, which, supported by the main frame, achieves the sliding of the working tool towards the suitable work location on a preloaded guiding system, by means of using a servomotor and spindle with a controlled clearance screw.
   - A hold-down plate with a depth controller responsible for assuring that the parts to be worked are held down correctly; this device having a system for regulating the hold-down force, and further having an analog or digital system (optional) controlling the forward movement of the shaft Z for very delicate high precision work, such as cone countersinks, etc.
   - A positioning reference and correction system, for example with artificial vision cameras, which system, integrated into the computer control system, allows establishing the position of the work unit with respect to areas of the application surface with special features, placing and correcting, if necessary, the parameters defining the location of the work unit on the application surface.

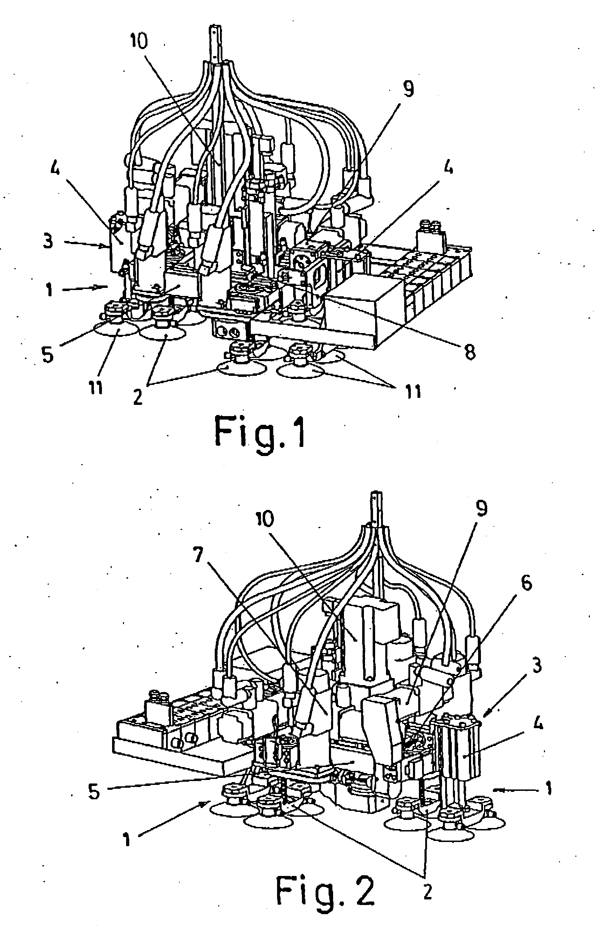

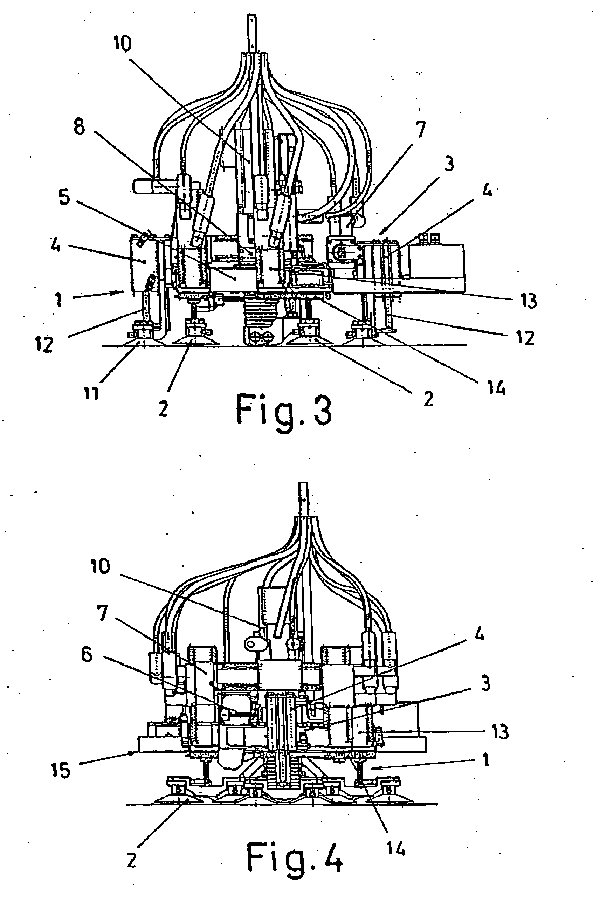

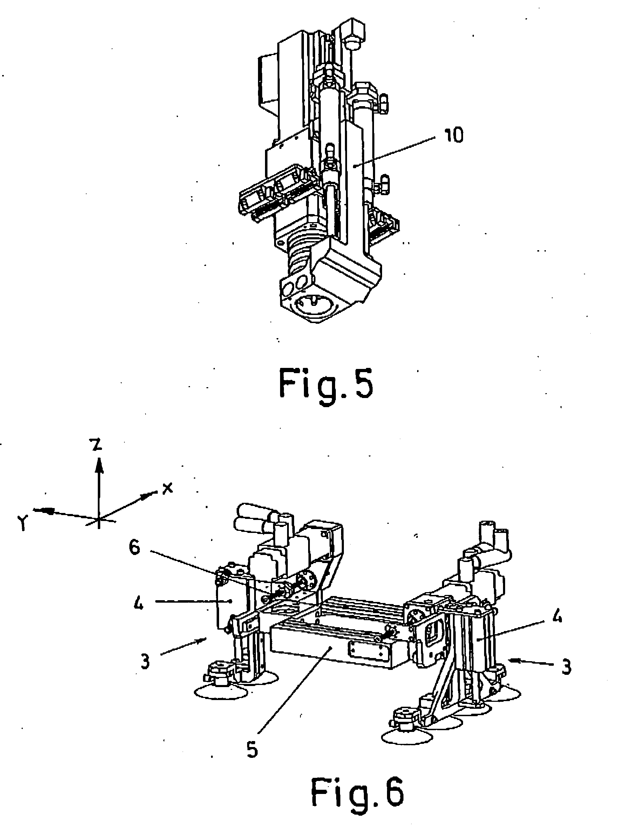

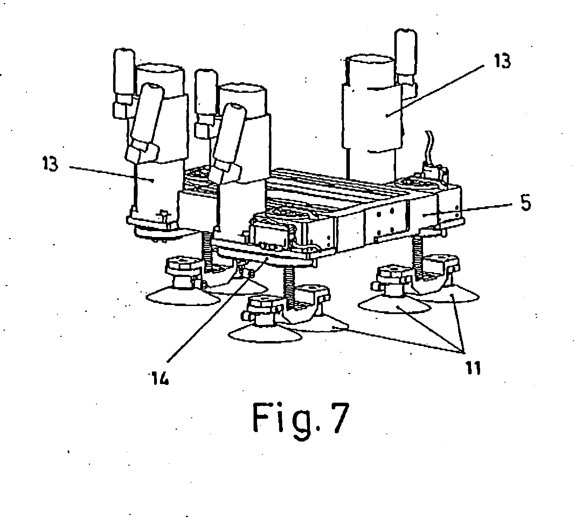

According to an assembly embodiment (Figures 1 to 7), the mobile assembly incorporates two longitudinal forward movement systems (1), by means of a fixing system (2) and a traction system (3) which are integrated in similar respective assemblies acting in an independent or synchronised manner on both sides, the mobility of the assembly being determined by means of actuating both systems, causing a very precise step by step forward movement, due to the side actuations by means of independent servomotors (4). An independent actuation of these systems in turn corrects the angular positioning of the mobile assembly.

The mobile assembly consists of a frame (5), to which the traction-fixing systems are associated, the fixing system (2) of each side assembly comprising several vacuum suction cups assembled in pairs, whereas the traction system (3) of each of the mentioned side assemblies comprises an actuation by means of a servomotor (4), through a spindle (6) with a controlled clearance screw.

The frame (5) is supported, in the longitudinal movement X on the fixing suction cups, by means of pneumatic electroactuators (7) defining a floating suspension of said frame (5) during the movement, a carriage (8) being located on this frame (5) which can move transversely by means of actuation by a servomotor (9), the working head (10) being vertically incorporated in such carriage (8), which head can incorporate any type of machining tool for drilling, riveting, welding, etc.

The frame (5) further incorporates at the lower part vacuum suction cups (11), which are arranged by means of corresponding vertical spindles (12), an independent actuation system by means of a servomotor (13) and a belt drive (14) being connected to the mentioned spindles (12), thus determining a mobility allowing the vertical movement of the mobile assembly in order to position the working head (10) in relation to the application surface for the machining.

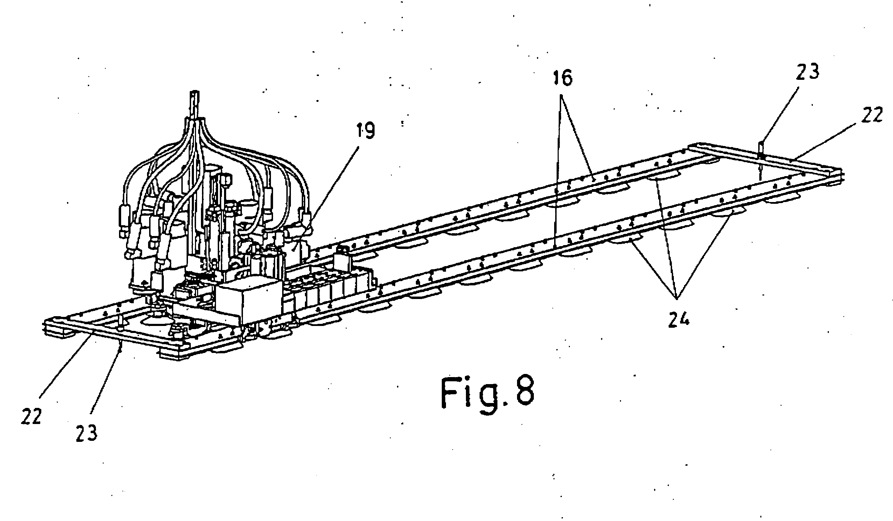

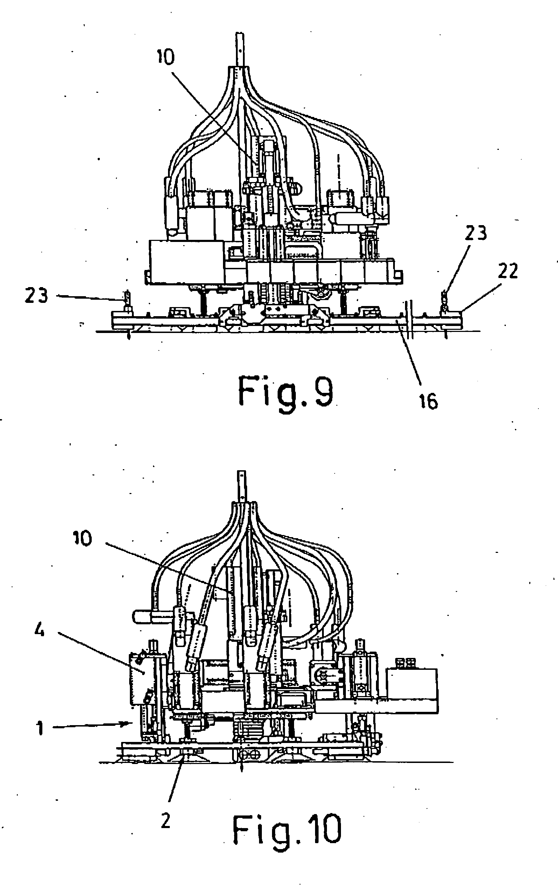

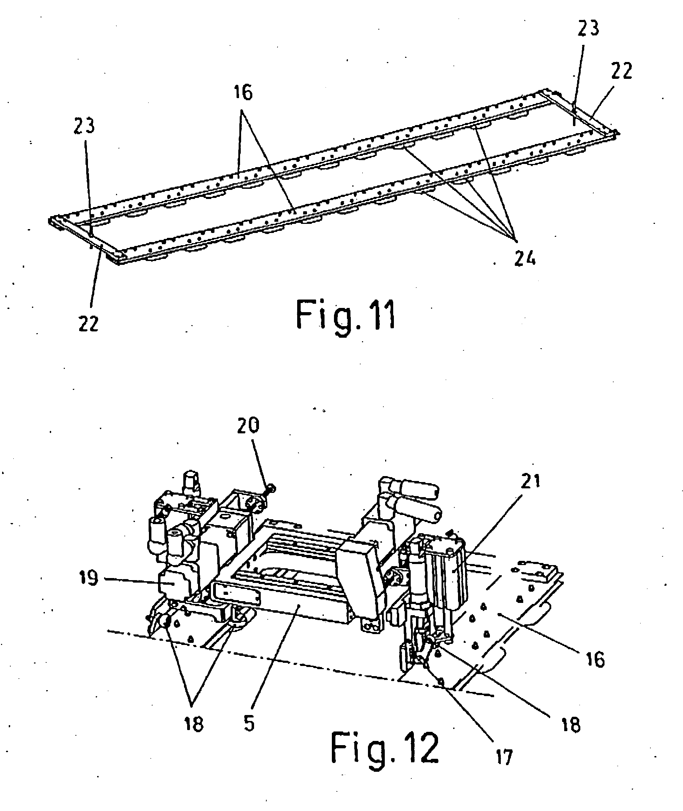

In another assembly embodiment (Figures 8 to 12), the mobile assembly is assembled with respect to the rails (16), by means of a locking system and a traction system, which are also integrated in respective identical assemblies which act in a synchronised manner on the respective rails (16) of both sides, the mobility of the movement being determined by means of actuating both systems, causing a step by step forward movement which, together with the action of the actuation on both sides, gives rise to a great precision of the movement for placing the mobile assembly in the corresponding place.

In this case, the mobile assembly also consists of a frame, to which the traction and locking systems are associated, the locking system of each side assembly comprising a pneumatic clamp (17) which can perform a locking catch on the corresponding rail (16), whereas the traction system of each one of the mentioned side assemblies comprises sets of wheels (18) forming a rolling sliding on the inner edge of the respective rail (16), said sets of wheels (18) acting in a driving actuation by means of a servomotor (19), through a spindle (20) with a controlled clearance screw.

In this case, the frame (5) of the mobile assembly is supported on the sets of wheels (18) by means of pneumatic actuators (21) defining the floating suspension; the working head (10) being located on said frame (5) by means of a carriage (8) which can move transversally, in the same way as in the embodiment of Figures 1 to 7 explained above.

The frame (5) also incorporates at the lower part vacuum suction cups (11), which are arranged by means of corresponding vertical spindles (12) with a hollow shaft, whereby vacuum is provided for actuating said suction cups (11), in this case a common actuation system by means of a servomotor (13) and a belt transmission (14) being connected to the mentioned spindles (12), also determining a mobility allowing the vertical movement of the mobile assembly in order to position the working head (10) in relation to the application surface for the machining.

The rails (16) are formed by flexible profiles made of CFRP, which rails are arranged in parallel, joined by means of transverse plates (22), in which extendable bolts (23) are incorporated, by means of which the exact positioning of the installation with respect to the application surface is provided.

Said profiles of the rails (16) incorporate at the lower part vacuum suction cups (24) having points of innocuous material for contacting the application surface, which allow establishing a reference for fixing the mentioned profiles on the application surface.

These profiles of the rails (16) are further used as distribution as vacuum storage and distribution channels necessary for the suction cups (24), sectoring the distribution in order to minimize the effects of possible local vacuum loses; although the bolts (23) of the transverse plates (22) prevent the work unit from falling in the event of vacuum loss in all the suction cups (24).

In both embodiments the suction cups (11) allow fixing the mobile assembly on the application surface in order to perform the machining, whereby achieving that the working head (10) is perfectly held in the position of the machining, said holding being directly applied from the block of the mobile assembly to the work surface.

According to said application the suction cups (11) are structured with two elastic support edges, by means of which the contact for the fixing on the application surface is formed, without it experiencing deterioration. At the inner part, said suction cups (11) further define a hard reference point, by means of which the fixing position on the application surface is exactly defined.

Detectors are further arranged in the different parts of the mobile assembly by means of which a control of the positioning is established, starting from an initial position which is established by means of one or more sensors (15) with respect to a predetermined reference point, correcting the deviations which can occur with respect to the programmed positions for performing the machining, the functional assembly being controlled by a computer system according to specific programs for the machining operations to be performed in each case.

## Claims

1. A flexible assembly for performing work on large surfaces of the type incorporating a mobile assembly carrying the working head, in an arrangement of movement on the application surface;
the mobile assembly carrying the working head (10) being assembled with respect to movement systems (1) integrated in respective side assemblies, each of which comprises a fixing system (2) and a traction system (3), which act in an independent or synchronised manner, such that the assembly can move in a step by step forward movement by means of actuating both systems (2 and 3), which, together with the action of the actuation on both sides, provides a movement which allows placing the mobile assembly in the corresponding place with precision;
the movement systems (1) integrated in the side assemblies incorporating at the lower part suction cups (11) for fixing the assembly on the application surface;
**characterized in that**
the suction cups have elastic edges which allow the fixing without damaging the application surface, whereas at the inner part they have a hard reference point which allows defining the fixing position exactly.

2. A flexible assembly for performing work on large surfaces according to claim 1, **characterized in that** the mobile assembly comprises a frame (5), to which the fixing (2) and traction (3) systems of the side assemblies are associated, the fixing system (2) of each side assembly comprising vacuum suction cups, whereas the traction system (3) of each of said side assemblies comprises an actuation by means of a servomotor (4), through a spindle (6) with a controlled clearance screw.

3. A flexible assembly for performing work on large surfaces according to claim 1 or claim 2, **characterized in that** in the mobile assembly there are arranged sensors (15) by means of which the position of the head (10) is established on the work areas, in relation to predetermined reference points, correcting the deviations that can occur with respect to the programmed positions for performing the work.

4. A flexible assembly for performing work on large surfaces according to claim 1, **characterized in that** the mobile assembly carrying the working head (10) can be assembled on rails (16) by means of a locking system and a traction system integrated on respective side assemblies which act independently in a synchronised manner on the respective rails (16), such that the assembly can move in steps across said rails (16) by means of actuating both systems on each of the sides.

5. A flexible assembly for performing work on large surfaces according to claim 4, **characterized in that** the locking system of each side assembly comprises a pneumatic clamp (17), by means of which there can be a locking catch on the corresponding rail (16), whereas the traction system of each side assembly comprises sets of wheels (18) by means of which a motor-driven rolling sliding on the inner edge of the respective rail (16) is provided.

6. A flexible assembly for performing work on large surfaces according to claim 4, **characterized in that** the rails (16) incorporate suction cups (24) at the lower part for the fixing on the application surface, which suction cups have hard reference points at the inner part in order to establish the fixing positions, whereas transverse plates (22) are incorporated between the rails (16), which plates incorporate extendable bolts (23) which allow determining the location of the assembly in the installation.

7. A flexible assembly for performing work on large surfaces according to claims 4 and 6, **characterized in that** the rails (16) are formed by hollow flexible profiles which are used as vacuum supply storage and distribution channels for the suction cups (24), said supply being formed in a sectored manner in relation to the assembly of the different suction cups (24).

## Patentansprüche

1. Flexible Baugruppe zum Ausführen von Arbeiten an großen Flächen des Typs, der eine mobile Baugruppe beinhaltet, die den Arbeitskopf trägt, in einer Bewegungsanordnung auf der Anwendungsfläche;
wobei die den Arbeitskopf (10) tragende mobile Baugruppe mit Bezug auf Bewegungssysteme (1) montiert ist, die in jeweilige seitliche Unterbaugruppen integriert sind, die jeweils ein Fixiersystem (2) und ein Antriebssystem (3) umfassen, die auf unabhängige oder synchronisierte Weise arbeiten, so dass sich die Baugruppe durch Betätigen beider Systeme (2 und 3) in einer schrittweisen Vorwärtsbewegung bewegen kann, was, zusammen mit der Aktion des Betätigens beider Seiten, eine Bewegung ergibt, mittels derer die mobile Baugruppe präzise an der entsprechenden Stelle platziert werden kann;
wobei die in die seitliche Unterbaugruppen integrierten Bewegungssysteme (1) am unteren Teil Saugnäpfe (11) zum Fixieren der Baugruppe auf der Anwendungsfläche aufweisen;
**dadurch gekennzeichnet, dass**
die Saugnäpfe elastische Ränder haben, die ein Fixieren ohne Beschädigung der Anwendungsfläche zulassen, während sie am Innenteil einen festen Bezugspunkt haben, mit dem die Fixierposition exakt definiert werden kann.

2. Flexible Baugruppe zum Ausführen von Arbeiten auf großen Flächen nach Anspruch 1, **dadurch gekennzeichnet, dass** die mobile Baugruppe einen Rahmen (5) umfasst, mit dem das Fixiersystem (2) und das Antriebssystem (3) der seitlichen Unterbaugruppen assoziiert sind, wobei das Fixiersystem (2) jeder seitlichen Unterbaugruppe Vakuumsaugnäpfe umfasst, während das Antriebssystem (3) jeder der genannten seitlichen Unterbaugruppen einen Aktuator in Form eines Servomotors (4) durch eine Spindel (6) mit Spielregulierschraube umfasst.

3. Flexible Baugruppe zum Ausführen von Arbeiten auf großen Flächen nach Anspruch 1 oder Anspruch 2, **dadurch gekennzeichnet, dass** in der mobilen Baugruppe Sensoren (15) angeordnet sind, mittels derer die Position des Kopfes (10) auf den Arbeitsbereichen in Bezug auf vorbestimmte Bezugspunkte eingestellt wird, wobei die Abweichungen, die mit Bezug auf die programmierten Positionen zum Ausführen der Arbeit auftreten können, korrigiert werden.

4. Flexible Baugruppe zum Ausführen von Arbeiten auf großen Flächen nach Anspruch 1, **dadurch gekennzeichnet, dass** die den Arbeitskopf (10) tragende mobile Baugruppe mittels eines Verriegelungssystems und eines Antriebssystems, das auf jeweiligen seitlichen Unterbaugruppen integriert ist, die unabhängig auf synchroniserte Weise auf den jeweiligen Schienen (16) wirken, auf Schienen (16) montiert werden kann, so dass sich die Baugruppe bei Betätigung beider Systeme auf jeder Seite schrittweise über die Schienen (16) bewegen kann.

5. Flexible Baugruppe zum Ausführen von Arbeiten auf großen Flächen nach Anspruch 4, **dadurch gekennzeichnet, dass** das Verriegelungssystem jeder seitlichen Unterbaugruppe eine Druckluftklemme (17) umfasst, aufgrund derer eine Verriegelungsraste auf der entsprechenden Schiene (16) sein kann, während das Antriebssystem jeder seitlichen Unterbaugruppe Rädersätze (18) umfasst, mittels derer eine auf der Innenkante der jeweiligen Schiene (16) gleitende motorgetriebene Rolle vorgesehen ist.

6. Flexible Baugruppe zum Ausführen von Arbeiten auf großen Flächen nach Anspruch 4, **dadurch gekennzeichnet, dass** die Schienen (16) am unteren Teil Saugnäpfe (24) zum Fixieren auf der Anwendungsfläche aufweisen, wobei die Saugnäpfe feste Bezugspunkte am Innenteil haben, um die Fixierpositionen zu erzielen, während Querplatten (22) zwischen den Schienen (16) eingeschlossen sind, wobei diese Platten verlängerbare Schraubbolzen (23) beinhalten, mit denen der Ort der Baugruppe in der Installation bestimmt werden kann.

7. Flexible Baugruppe zum Ausführen von Arbeiten auf großen Flächen nach den Ansprüchen 4 und 6, **dadurch gekennzeichnet, dass** die Schienen (16) durch flexible Hohlprofile gebildet sind, die als Vakuumvorratsspeicher und Verteilungskanäle für die Saugnäpfe (24) verwendet werden, wobei der genannte Vorrat auf sektorierte Weise in Bezug auf die Baugruppe der unterschiedlichen Saugnäpfe (24) ausgebildet ist.

## Revendications

1. Ensemble flexible servant à effectuer des travaux sur de grandes surfaces du type comportant un ensemble mobile portant la tête de travail, dans un agencement de mouvement sur la surface d'application ;
l'ensemble mobile portant la tête de travail (10) étant monté par rapport aux systèmes de mouvement (1) lesquels sont intégrés dans des ensembles latéraux respectifs, alors que chacun d'entre eux comprend un système de fixation (2) et un système de traction (3), qui interviennent de façon indépendante ou synchronisée, de telle sorte que l'ensemble est apte à se déplacer suivant un mouvement de pas à pas vers l'avant, grâce à l'actionnement des deux systèmes (2 et 3), ce qui, en conjonction avec l'action offerte par l'actionnement sur les deux côtés, procure un mouvement qui permet de positionner avec précision l'ensemble mobile dans l'emplacement correspondant ;
les systèmes de mouvement (1) intégrés aux ensembles latéraux incorporant des ventouses (11) au niveau de la section inférieure, ce qui permet de fixer l'ensemble sur la surface d'application ;
**caractérisé en ce que**
les ventouses comportent des bords élastiques qui permettent d'effectuer la fixation sans endommager la surface d'application, alors que leur partie interne comporte un point de référence dur lequel permet de définir avec exactitude la position de fixation.

2. Ensemble flexible servant à effectuer des travaux sur de grandes surfaces selon la revendication 1, **caractérisé en ce que** l'ensemble mobile comprend un cadre (5) auquel sont associés les systèmes de fixation (2) et de traction (3) des ensembles latéraux, le système de fixation (2) de chaque ensemble latéral comportant des ventouses à dépression, tandis que le système de traction (3) de chacun desdits ensembles latéraux comprend une fonction d'actionnement obtenue au moyen d'un servomoteur (4), par l'intermédiaire d'une broche (6) avec une vis à dégagement contrôlé.

3. Ensemble flexible servant à effectuer des travaux sur de grandes surfaces selon la revendication 1 ou la revendication 2, **caractérisé en ce que** des capteurs (15) sont agencés dans l'ensemble mobile, capteurs au moyen desquels la position de la tête (10) est établie sur les zones de travail par rapport à des points de référence prédéterminés, tout en rectifiant les écarts susceptibles de se produire par rapport aux positions programmées pour l'exécution du travail.

4. Ensemble flexible servant à effectuer des travaux sur de grandes surfaces selon la revendication 1, **caractérisé en ce que** l'ensemble mobile portant la tête de travail (10) peut être monté sur des rails (16) à l'aide d'un système de verrouillage et d'un système de traction lesquels sont intégrés à des ensembles latéraux respectifs qui interviennent indépendamment suivant une manière synchronisée sur les rails (16) respectifs, de sorte que l'ensemble puisse se déplacer par étapes sur lesdits rails (16) suite à l'actionnement des deux systèmes prévus sur chacun des côtés.

5. Ensemble flexible servant à effectuer des travaux sur de grandes surfaces selon la revendication 4, **caractérisé en ce que** le système de verrouillage sur chaque ensemble latéral comporte une pince pneumatique (17) grâce à laquelle il est possible de prévoir un loquet de verrouillage sur le rail correspondant (16), tandis que le système de traction de chaque ensemble latéral comporte des jeux de roues (18) grâce auxquels on obtient un coulissement de roulement motorisé sur le bord interne du rail respectif (16).

6. Ensemble flexible servant à effectuer des travaux sur de grandes surfaces selon la revendication 4, **caractérisé en ce que** les rails (16) incorporent des ventouses (24) au niveau de la section inférieure pour permettre la fixation sur la surface d'application, ces ventouses comportant des points de référence durs au niveau de la partie intérieure afin de pouvoir établir les positions de fixation, tandis que des plaques transversales (22) sont incorporées entre les rails (16), ces plaques incorporant des boulons extensibles (23) qui permettent de déterminer l'emplacement de l'ensemble dans l'installation.

7. Ensemble flexible servant à effectuer des travaux sur de grandes surfaces selon les revendications 4 et 6, **caractérisé en ce que** les rails (16) sont fabriqués à partir de profilés flexibles et creux lesquels sont utilisés en tant que passages de distribution et de stockage de l'alimentation en dépression destinée aux ventouses (24), ladite alimentation étant formée suivant une manière segmentée par rapport à l'ensemble des différentes ventouses (24).
